**Europäisches Patentamt**

**European Patent Office**

**Office européen des brevets**

(11) Veröffentlichungsnummer: **0 234 414**
**A2**

# (12) EUROPÄISCHE PATENTANMELDUNG

(21) Anmeldenummer: **87101920.4**

(22) Anmeldetag: **11.02.87**

(51) Int. Cl.³: **B 62 D 53/08**
**B 62 D 47/02**

(30) Priorität: **26.02.86 DE 3606120**

(43) Veröffentlichungstag der Anmeldung:
**02.09.87 Patentblatt 87/36**

(84) Benannte Vertragsstaaten:
**FR IT NL SE**

(71) Anmelder: **Schultz, Rainer M.**
**Lagerlöfstrasse 19**
**D-2000 Hamburg 65(DE)**

(72) Erfinder: **Schultz, Rainer M.**
**Lagerlöfstrasse 19**
**D-2000 Hamburg 65(DE)**

(74) Vertreter: **Hinrichsen, Ludwig**
**Einsteinstrasse 15**
**D-8012 Ottobrunn(DE)**

(54) **Einknickschutz-Vorrichtung für einen Sattelzug.**

(57) Bei einer Einknickschutz-Vorrichtung für einen Sattelzug, bei der sich beim Ankuppeln des Sattelanhängers 2 an die Zugmaschine 1 ein Königszapfen 4 und ein in Fahrtrichtung hinter diesem angeordneter Keil 5 in eine Sattelkupplung 3 der Zugmaschine 1 einschiebt, kann ein mit dem Keil 5 verbundener Zapfen 9 in einer Führung 13 eine durch doppeltwirkende Hydraulikzylinder 16 und 17 in Verbindung mit einer Hydraulikventilgruppe 25 und einem Steuergerät 26 begrenzte und gedämpfte Bewegung ausführen. An der Führung 13 sind Endschalter 20 und 21 zur Begrenzung eines von der Fahrzeugkonstruktion abhängigen, vorbestimmten Knickwinkels in Verbindung mit Sperrventilen 30 und 35 vorhanden. Die Dämpfung der Drehbewegung zwischen der Zugmaschine 1 und dem Sattelanhänger 2 erfolgt mit Drosselventilen 40 und 45 in Abhängigkeit von einem Geschwindigkeitsmesser 59 und zwei Druckschaltern 61, 61a für den Bremsdruck.

FIG. 5

Croydon Printing Company Ltd.

EP 0 234 414 A2

.-Ing. Ludwig Hinrichsen

Patentingenieur

EUROPEAN PATENT ATTORNEY

Einsteinstr. 15

D-8012 Ottobrunn

Tel. (089) 6 09 12 13

Erfinder: Rainer M. Schultz

0234414

den 10.02.1987

Zeichen: RSch - O1

## Einknickschutz-Vorrichtung für einen Sattelzug

Die Erfindung betrifft eine Einknickschutz-Vorrichtung für einen Sattelzug gemäß dem Oberbegriff des Anspruchs 1.

Eine solche Einknickschutz-Vorrichtung ist durch die US-PS 41 09 929 bekannt. Dort ist der in die Sattelkupplung eingeschobene Keil nach rückwärts verlängert und kann mit einer Bremsscheibe, die kreisförmig um die Sattelkupplung am Sattelanhänger angebracht ist, zusammenwirken. Bei einer Bremsung des Zugwagens während der Geradeausfahrt wird gleichzeitig der Keil mit seinem rückwärtigen Teil gegen die Bremsscheibe gedrückt, wodurch ein Ausscheren des Sattelanhängers gegenüber dem Zugwagen verhindert wird. Während der Kurvenfahrt erfolgt eine schwächere Andrückung des Keils auf die Bremsscheibe. Diese Anordnung arbeitet somit unabhängig von der Geschwindigkeit des Sattelzuges. Beim Rangieren mit niedriger Geschwindigkeit ist eine dabei unerwünschte Bremsung des Sattelanhängers vorhanden.

Es sind weitere druckschriftlich belegte Vorrichtungen bekannt, die jedoch jeweils die Dämpfung der Drehbewegung zwischen dem Zugwagen und dem Sattelanhänger (Knickwinkel-Dämpfung) nur entweder in Abhängigkeit von der Fahrgeschwindigkeit oder vom Bremsdruck vornehmen. So ist in der DE-OS 30 04 409 eine Einknickschutz-Vorrichtung beschrieben, die in Abhängigkeit von der Fahrzeuggeschwindigkeit die Winkelbewegung zwischen Zugfahrzeug und Anhänger mehr oder weniger stark dämpft, wobei zwei Paar nur einseitig wirkende Hydraulikzylinder mit einer Hydraulikventilgruppe und einem Steuergerät zusammenwirken. Die US-PS 40 15 856 beschreibt eine Stabilisierungsvorrichtung zur Steuerung des Schaukelns eines gezogenen Anhängers, bei der zwei einfach wirkende Hydraulikzylinder in Verbindung mit einem Zapfen und einem um den Zapfen gelegten, mit dem Zugwagen verbundenen Kabel eine Knickwinkel-Dämpfung bewirken.

- 1a -

Schließlich ist durch die US-PS 32 50 547 ein hydraulisches Steuerungssystem für Sattelzüge bekannt, bei dem durch Öffnen eines Ventils ein ungehindertes Rangieren des Sattelzuges mit ungedämpftem Einknicken des Sattelanhängers ermöglicht wird.

Der Erfindung liegt die Aufgabe zugrunde, eine Einknickschutz-Vorrichtung der eingangs genannten Art dahingehend zu verbessern, daß bei vorbestimmbaren Kennwerten der Geschwindigkeit und des Bremsdruckes ein Einknicken des Sattelzuges wirkungsvoll verhindert wird. Diese Aufgabe wird in vorteilhafter Weise durch die kennzeichnenden Merkmale des Anspruchs 1 gelöst. Vorteilhafte Weiterbildungen der Erfindung sind in den Unteransprüchen 2 bis 6 wiedergegeben.

Durch die erfindungsgemäße Vorrichtung kann jede Variation der Dämpfung in der relativen Bewegung zwischen der Zugmaschine und dem Sattelanhänger ausgeführt werden. Es kann somit das Aufkommen anomaler Bewegungen, wie Schleudern oder Ausbrechen des Sattelanhängers, schon im Ansatz wirkungsvoll verhindert werden. Die mit den doppelt wirkenden Hydraulikzylindern arbei- ..........

- 2 -

Seite - 2 -

*hydraulische*

tende und durch die Ventilanordnung mit Hilfe des Steuergerätes
variierbare Dämpfung bzw. Verhinderung des Einknickens des
Sattelanhängers kann in Abhängigkeit von der Geschwindigkeit
und vom Bremsdruck der Zugmaschine  vorgenommen werden. Außerdem kann der maximale Knickwinkel, d. h. der höchst zulässige
Winkel zwischen den Längsachsen der Zugmaschine und des Sattelanhängers, auf einfache Weise durch die an der *Führung* ~~Schlitz~~ in
der Kupplungsgleitplatte angebrachten Endschalter entsprechend
der Konstruktion des Sattelzuges frei gewählt werden. Beim
Erreichen des maximalen Knickwinkels wird der Durchfluß zwischen
den beiden Hydraulikzylindern blockiert, wodurch dieser wichtige
Einknickschutz unabhängig von dem Bremsdruck und der jeweiligen
Geschwindigkeit ist. Mit Hilfe der erfindungsgemäßen Vorrichtung
kann aber auch ein ungehindertes Rangieren bei niedriger
Geschwindigkeit durchgeführt werden, indem die Endschalter
erst bei einer Geschwindigkeit von ca. 15 km/h eingeschaltet
werden. Dabei wird der maximal zulässige Knickwinkel durch
die Bogenlänge der *Führung* ~~Schlitzes~~ z. B. auf 135° nach jeder Seite
erweitert, so daß eine Beschädigung der Einknickschutz-Vorrichtung
bei größeren Rangierknickwinkeln vermieden wird. Der einfache
Aufbau mit handelsüblichen Bauteilen ergänzt die Vorteile
der vorliegenden Vorrichtung.

Die Erfindung wird nachstehend anhand eines in der Zeichnung
dargestellten Ausführungsbeispieles erläutert. Es zeigen in
schematischer Darstellung:

Figur 1 - einen Sattelzug von unten gesehen vor dem Einkuppeln;
Figur 2 - den Kupplungsbereich des Sattelzuges nach dem
          Einkuppeln;
Figur 3 - einen Schnitt entsprechend den Linien III - III
          der Figur 2;

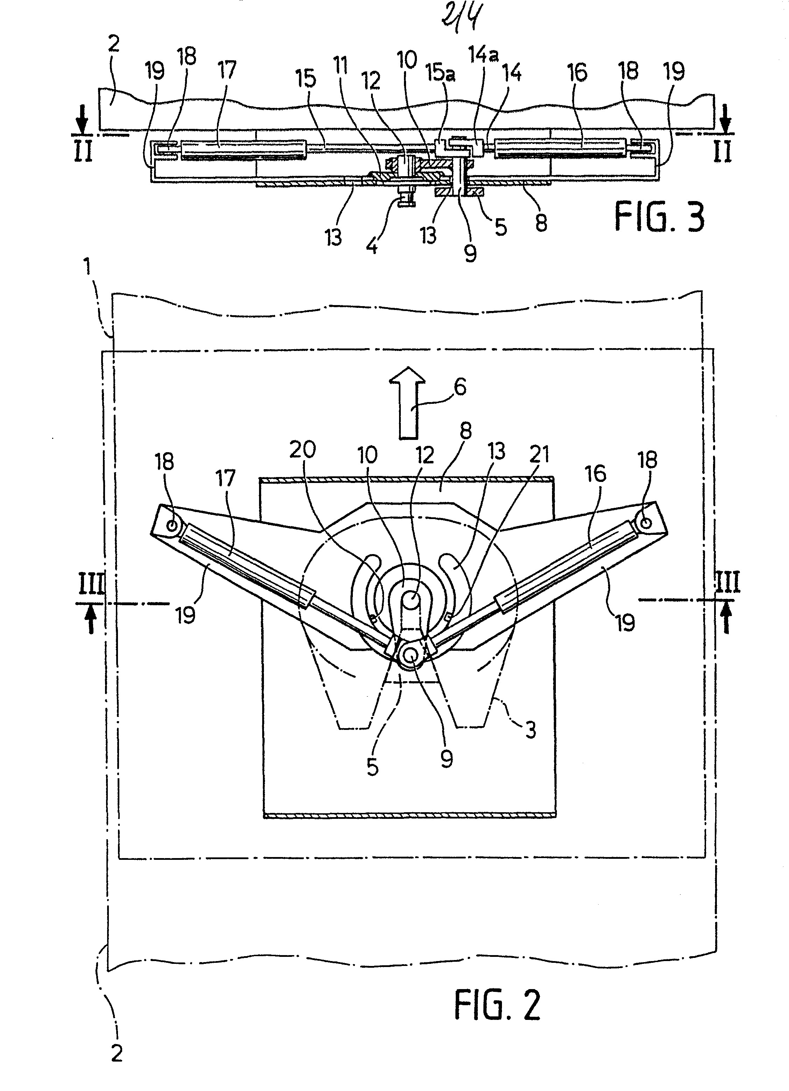

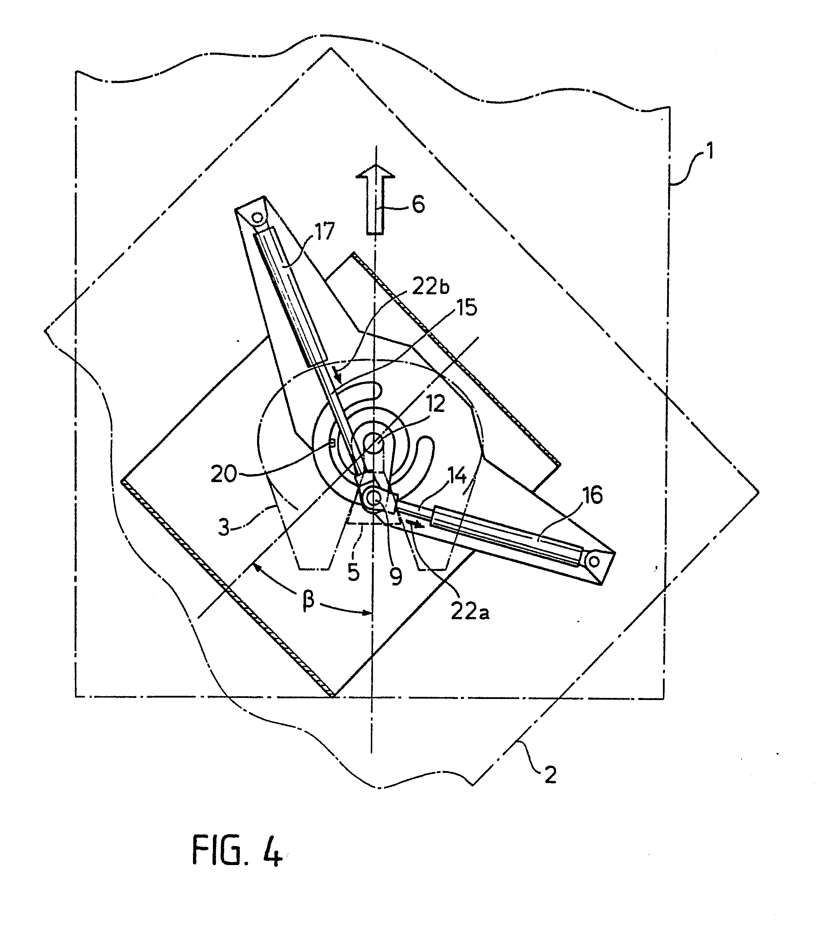

Figur 4 - den Kupplungsbereich des Sattelzuges nach Figur  2
          mit eingeknicktem Sattelanhänger;

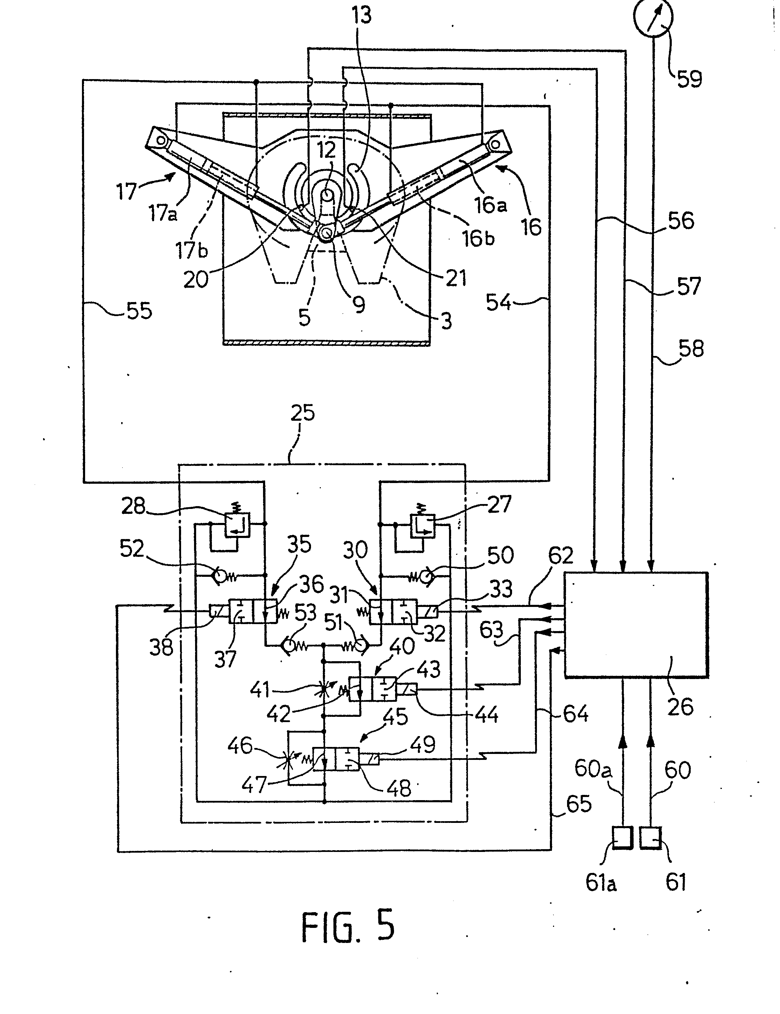

Figur 5 - eine Gesamtdarstellung einer Einknickschutz-Vorrichtung.

- 3 -

Seite - 3 -

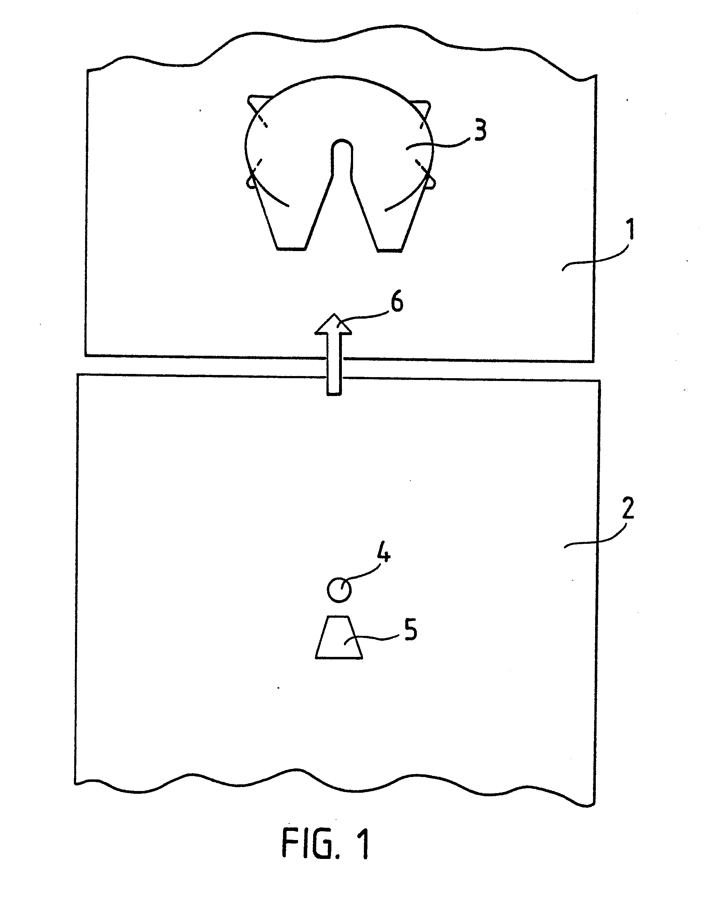

Die Figur 1 zeigt von unten her gesehen die Umrisse eines
Sattelzuges mit einer Zugmaschine 1 und einem Sattelanhänger 2
vor dem Einkuppeln. Beim Einkuppeln werden in eine an der
Zugmaschine 1 befindliche Sattelkupplung 3 zuerst ein Königszapfen 4 und danach ein in die Öffnung der Sattelkupplung 3
passender Keil 5 eingeschoben, die an dem Sattelanhänger 2
angebracht sind. Ein Pfeil 6 zeigt die Fahrtrichtung und
die Richtung des Einkuppelns.an.

Die Figuren 2 und 3 zeigen den Kupplungsbereich des Sattelzuges
nach dem Einkuppeln. Dabei sind in der Figur 2 die am Sattelanhänger 2 angeordneten Bauteile, die in Richtung der Linien
II - II der Figur 3 gezeigt sind, in ausgezogenen Strichen.
bzw. gestrichelt und die an der Zugmaschine 1 angebrachte Sattelkupplung 3 strichpunktiert dargestellt. Die Figur 3 zeigt
eine Schnittdarstellung entsprechend den Linien III - III der
Figur 2, wobei der Übersichtlichkeit halber der Keil 5 rechts
neben dem Königszapfen 4 dargestellt ist. Der Keil 5 ist unter
einer Kupplungsgleitplatte 8 an einem vertikalen Schwenk~~Z~~apfen 9
befestigt, der durch die Kupplungsgleitplatte 8 geführt und mit
einem horizontalen Hebel 10 verbunden ist. Dieser Hebel 10 und
damit auch der Schwenk~~Z~~apfen 9 und der Keil 5 sind in der Figur 3
um 90° gedreht dargestellt. Der Hebel 10 ist an einem in gleicher
Achse mit dem Königszapfen 4 auf einem Lagerflansch 11 angeordneten Drehzapfen 12 angelenkt. Der Schwenk~~Z~~apfen 9 schwenkt
durch eine~~r~~ ~~Schlitz~~ 13 in der Kupplungsgleitplatte 8 und
*kreisbogenförmige Führung*
erhält durch die Länge de~~s~~ ~~Schlitzes~~ 13 in beiden Richtungen
*r Führung*
einen maximalen Bewegungsraum. Weiterhin sind an das obere
Ende des Schwenk~~Z~~apfens 9 Winkelaugen 14a und 15a von Kolbenstangen 14 und 15 drehbar angelenkt, die in Hydraulikzylinder 16
und 17 führen. Letztere sind mit Augen 18 drehbar im Flansch
einer Konsole 19 aufgehängt. Auf der Kupplungsgleitplatte 8
sind bei einem vorzubestimmenden Schwenkwinkel für den ~~Schwenk-~~
~~Z~~apfen 9 Endschalter 20 und 21 angebracht. Dieser durch die
Endschalter 20 und 21 begrenzte Schwenkwinkel ist somit der
nach beiden Seiten maximal zulässige Knickwinkel ß für den

- 4 -

Seite - 4 -

Sattelanhänger 2 gegenüber der Zugmaschine 1. Die Endschalter
20 und 21 geben im eingeschalteten Zustand beim Vorbeiführen
des Schwenkzapfens 9 einen Kontakt Über-Schaltung 26 in die
weiter unten anhand der Figur 5 zu beschreibende Hydraulikventilgruppe.

In der Figur 4 ist die bereits in der Figur 2 gezeigte Sattelzuganordnung bei einem Knickwinkel ß = 45° des Sattelanhängers 2
gegenüber der Zugmaschine 1 dargestellt. Während die Zugmaschine 1 entsprechend Pfeil 6 geradeaus fährt, ist der Sattelanhänger 2 in seiner Einknickbewegung bei dem Knickwinkel ß
durch den Kontakt des Schwenkzapfens 9 mit dem hier verdeckten
Endschalter 21 gestoppt worden. Bei dieser Einknickbewegung
schiebt sich die Kolbenstange 14 entsprechend dem Pfeil 22a in
den Hydraulikzylinder 16 und wird die Kolbenstange 15 entsprechend dem Pfeil 22b aus dem Hydraulikzylinder 17 herausgezogen. Die Drehung des Sattelanhängers 2 erfolgt dabei um den
Königszapfen 4 und der Schwenkzapfen 9 mit den Kolbenstangen 14 und
15 wird durch den in der Sattelkupplung 5 festsitzenden Keil
5 mitgenommen.

Die Figur 5 zeigt eine Gesamtdarstellung eines Ausführungsbeispieles für die Einknickschutz-Vorrichtung. Außer den bereits
beschriebenen Bauteilen ist am Sattelanhänger 2 eine Ventilanordnung 25 und ein die Vorgänge im gesamten Hydrauliksystem
elektronisch steuerndes Steuergerät 26 dargestellt. In der
Ventilanordnung 25 sind zwei Überdruckventile 27, 28 als Schutz
vor extremen Drücken in dem Hydrauliksystem, zwei Sperrventile
30, 35, zwei Drosselventile 40, 45 und vier Einweg-Durchgangsventile 50, 51, 52, 53 vorhanden. Die Sperrventile 30 und 35
haben je eine Durchgangsstellung 31 und 36, eine Sperrstellung
32 und 37 und je ein Solenoid 33 und 38. Die Drosselventile 40
und 45 haben je eine Drosselstellung 41 und 46, eine Durchgangsstellung 42 und 47 und je eine Sperrstellung 43 und 48,
die gleichzeitig Drosselstellung 41,46 ist, und je ein
Solenoid 44 und 49. Die Ventilanordnung 25 ist über Hydraulikleitungen 54 und 55 mit den doppeltwirkenden Hydraulikzylindern
16 und 17 verbunden. Dabei ist die Leitung 54 mit dem unterhalb

- 5 -

Seite - 5 -

des Kolbens befindlichen Zylinderraum 16b des Zylinders 16
und mit dem oberhalb des Kolbens befindlichen Zylinderraum 17a
des Zylinders 17 verbunden. Die Leitung 55 ist entsprechend
mit den Zylinderräumen 17b und 16a verbunden. In das Steuergerät 26 führen eine Leitung 56 von dem Endschalter 21, eine
Leitung 57 von dem Endschalter 20, eine Leitung 58 von einem
Geschwindigkeitsmesser 59 ~~und~~ *sowie* eine Leitung 60 von einem Druckschalter 61, ~~einer~~ *und* Leitung 60a von einem Druckschalter 61a,
die vom Bremsdruck geschaltet werden. Vom Steuergerät 26
führen elektrische Leitungen 62, 63, 64 und 65 zu den Solenoiden
33, 44, 49 und 38 der Ventile 30, 40, 45 und 35. Im Steuergerät werden Impulse aus den zuführenden Leitungen in Signale
zu den abführenden Leitungen entsprechend eingegebenen
Programmen umgesetzt.

Die gesamte Steuerhydraulik hat die Aufgabe, die Drehbewegungen
der Zugmaschine 1 und des Sattelanhängers 2 zueinander bei
bestimmten Fahrzuständen durch Drosselung der zwischen den
Hydraulikzylindern 16 und 17 hin- und herfließenden Hydraulikflüssigkeit mit Hilfe der Ventilanordnung 25 und des Steuergerätes 26 zu dämpfen oder zu bremsen. Die Drosselung kann
sowohl abhängig von der Fahrzeuggeschwindigkeit als *auch* abhängig
vom Bremsdruck erfolgen. Dabei bewirken die Drosselventile 40
und 45 bei den Drosselstellungen 41 und 46 verschieden starke
Dämpfungen. So kann die Drosselstellung 41 eine leichte, die
Drosselstellung 46 eine mittlere und die hintereinander
geschalteten Drosselstellungen 41 und 46 eine starke Dämpfung
der Drehbewegung zwischen der Zugmaschine 1 und dem Sattelanhänger 2 bewirken.

Beispiel für eine Geschwindigkeitssteuerung

a) Geschwindigkeit v = 0 - 15 km/h: Bei dieser Anfahr- oder
   Rangiergeschwindigkeit ist mit ausgeschalteten Endschaltern 20 und 21 volle Freiheit der Drehbewegungen innerhalb des ~~Schlitzes~~ *Führers* 13 möglich. Keine Ventilbetätigung, d.h.
   die Hydraulikflüssigkeit fließt bei Knickwinkeln ß bis
   etwa 135° ungehindert durch die Durchgangsstellungen 31

- 6 -

Seite - 6 -

oder 36 sowie 42 und 47 der Ventile.

b) Geschwindigkeit v = 15 - 50 km/h: Die Endschalter 20 und 21
werden über die Leitungen 56 und 57 eingeschaltet, die
Solenoide 33 und 38 schalten über die Leitungen 62 und
65 die Sperrventile 30 und 35 in die Sperrstellungen 32
und 37 sobald der durch die Endschalter 20, 21 vorgegebene
Knickwinkel ß von zum Beispiel 45° innerhalb der *Führung* ~~Schlitzes~~
13 erreicht ist. Ein weiteres Einknicken über ß hinaus
ist dadurch verhindert, ein Zurückdrehen ist jederzeit
möglich.

c) Geschwindigkeit v über 50 km/h: Maßnahmen wie bei b);
zusätzlich wird über die Leitung 64 und den Solenoid 49 das
Drosselventil 45 in seiner Sperrstellung 48 geschaltet, so
daß die Hydraulikflüssigkeit durch die Drosselstellung 46
fließen muß. Dadurch ist bei jedem noch zulässigen Knickwinkel ß die Drehbewegung zwischen dem Zugwagen 1 und dem
Sattelanhänger 2 mittelstark gedämpft.

Beispiel für eine Bremsdruckdämpfung

a) Bremsdruck p kleiner als 0,3 bar: Volle Freiheit der Drehbewegung innerhalb der *Führung* ~~Schlitzes~~ 13, keine Ventilbetätigung.

b) Bremsdruck p zwischen 0,3 und 3,5 bar: Leichte Dämpfung
der Drehbewegung durch Betätigen des Ventils 40 in die
Sperrstellung 43 und Durchfluß durch die Drosselstellung 41.
die Endschalter 20, 21 begrenzen hierbei und bei de*n*
Beispiel*en* c) und d) die Drehbewegung des Sattelanhängers 2
auf den Knickwinkel ß = 45°.

c) Bremsdruck p zwischen 3,5 und 5 bar: Mittlere Dämpfung der
Drehbewegung durch Betätigen des Ventiles 45 in die Sperrstellung 48 und Durchfluß durch die Drosselstellung 46.

- 7 -

Seite - 7 -

d) Bremsdruck größer als 5 bar: Starke Dämpfung der Drehbewegung durch Betätigen der Ventile 40 und 45 in die Sperrstellung 43 und 48 und Durchfluß durch die hintereinander geschalteten Drosselstellungen 41 und 46.

Es liegt im Rahmen der Erfindung, bei einem weiteren nicht dargestellten Ausführungsbeispiel in der Ventilanordnung 25 die Drosselventile 40 und 45 durch nur ein Proportionalventil zu ersetzen, wodurch eine lineare Drosselung der Drehbewegungen zwischen der Zugmaschine 1 und dem Sattelanhänger 2 proportional zur Fahrzeuggeschwindigkeit erreicht wird. Dabei können auch die Druckschalter 61, 61a durch einen einzigen Druckaufnehmer ersetzt werden, der eine lineare Drosselung proportional zum Bremsdruck gestattet.

-.-.-.-

ing. Ludwig Hinrichsen
Patentingenieur
EUROPEAN PATENT ATTORNEY

Einsteinstr. 15
D-8012 Ottobrunn   den 10.02.1987
Tel. (089) 6 09 12 13

0234414

Erfinder: Rainer M. Schultz                    Zeichen: RSch - 01

## Einknickschutz-Vorrichtung für einen Sattelzug

### Patentansprüche

1. Einknickschutz-Vorrichtung für einen Sattelzug, bei der sich beim Ankuppeln des Sattelanhängers an den Zugwagen ein Königszapfen und ein in Fahrtrichtung hinter diesem angeordneter Keil in eine Sattelkupplung der Zugmaschine einschiebt, und die mit einer bei einigen Fahrzuständen und Knickwinkeln zwischen dem Zugwagen und dem Sattelanhänger ansprechenden und die Drehbewegung zwischen dem Zugwagen und dem Sattelanhänger dämpfenden hydraulischen Einrichtung und einem Steuergerät dafür versehen ist, g e k e n n z e i c h n e t  durch die nachfolgend aufgeführten Merkmale:

- daß in dem Keil (5) ein Zapfen (9) senkrecht eingesetzt ist, der in einer dem maximalen Knickwinkel (ß) zwischen dem Zugwagen (1) und dem Sattelanhänger (2) entsprechenden kreisbogenförmigen Führung (13) um einen mit dem Königszapfen (4) gleichachsigen Drehzapfen (12) schwenkbar ist,

- daß der Zapfen (9) zur Dämpfung der Drehbewegung zwischen dem Zugwagen (1) und dem Sattelanhänger (2) mit Kolbenstangen (14,15) von zwei doppeltwirkenden Hydraulikzylindern (16,17) verbunden ist,

- daß die Führung (13) mit zwei Endschaltern (20,21) versehen ist, die bei vorbestimmbaren Kennwerten für die Fahrgeschwindigkeit und den Bremsdruck, ausgelöst durch den Zapfen (9), ein Signal zur Begrenzung des Knickwinkels erzeugen,

- daß die Dämpfung der Drehbewegung (Knickwinkel ß) sowohl in Abhängigkeit von der Fahrgeschwindigkeit als auch vom Bremsdruck erfolgt.

- 2 -

2. Einknickschutz-Vorrichtung nach Anspruch 1, dadurch gekennzeichnet, daß der Zapfen (9) über einen Hebel (10) mit dem Drehzapfen (12) verbunden ist, die Führung (13) in eine oberhalb des Keils (5) angeordnete Kupplungs-Gleitplatte (8) einglassen ist und die doppeltwirkenden Hydraulikzylinder (16,17) gelenkig in einer mit dem Sattelanhänger (2) verbundenen Konsole (19) aufgehängt sind.

3. Einknickschutz-Vorrichtung nach den Ansprüchen 1 und 2, dadurch gekennzeichnet, daß die an der Führung (13) in der Kupplungs-Gleitplatte (8) angeordneten Endschalter (20,21) über elektrische Leitungen (56,57) mit einem elektrischen Steuergerät (26) verbunden sind und daß bei vorbestimmbaren Kennwerten für die Fahrgeschwindigkeit und den Bremsdruck die Endschalter (20,21) beim Vorbeiführen des Zapfens (9) einen Impuls in das Steuergerät (26) geben, das nach Verarbeitung weiterer Impulse eines Geschwindigkeitsmessers (59) und den Bremsdruck am Zugwagen (1) messenden Schaltern (61,61a) Signale in eine Hydraulikventilgruppe (25) gibt, die durch Einwirkung auf die Kolbenstangen (14,15) der Hydraulikzylinder (16,17) unterschiedliche Dämpfungen der Drehbewegungen zwischen dem Zugwagen (1) und dem Sattelanhänger (2) veranlaßt.

4. Einknickschutz-Vorrichtung nach den Ansprüchen 1 bis 3, dadurch gekennzeichnet, daß die Hydraulikventilgruppe (25) aus zwei Überdruckventilen (27,28), vier Einweg-Durchgangsventilen (50,51, 52,53), zwei Sperrventilen (30,35) mit je einer Durchgangsstellung (31,36), einer Sperrstellung (32,37) und je einem Solenoid (33,38) sowie aus zwei Drosselventilen (40,45) mit je einer Drosselstellung 41,46), Durchgangsstellung (42,47), einer Sperrstellung (43,48), die gleichzeitig Drosselstellung (41,46) ist, und je einem Solenoid (44,49) besteht.

5. Einknickschutz-Vorrichtung nach den Ansprüchen 1 bis 4, dadurch gekennzeichnet, daß bei niedriger Geschwindigkeit und bei kleinem Bremsdruck die Endschalter (20,21) ausgeschaltet sind und daß die Ventile der Hydraulikventilgruppe (25) zwei unterschiedliche Dämpfungswerte bei vorbestimmbaren Geschwindigkeiten und drei unterschiedliche Dämpfungswerte bei vorbestimmbaren Bremsdrücken zulassen.

6. Einknickschutz-Vorrichtung nach den Ansprüchen 1 bis 3, dadurch gekennzeichnet, daß die Hydraulikventilgruppe (25) aus zwei Überdruckventilen (27,28), vier Einweg-Durchgangsventilen (50,51,52,53), zwei Sperrventilen (30,35) mit je einer Durchgangsstellung (31,36), einer Sperrstellung (32,37) und je einem Solenoid (33,38) sowie aus einem Proportionalventil mit linearer Dämpfung der Drehbewegung zwischen dem Zugwagen (1) und dem Sattelanhänger (2) proportional zur Anzeige des Geschwindigkeitsmessers (59) und einem Druckaufnehmer zur linearen Dämpfung der Drehbewegung proportional zur Bremsdruckanzeige der Schalter (61,61a) besteht.

- - - - - - - - - - - - - -

114

**FIG. 1**

0234414

FIG. 3

FIG. 2

FIG. 4

FIG. 5